## Europäisches Patentamt
## European Patent Office
## Office européen des brevets

(19)

(11) Veröffentlichungsnummer: **0 074 040**
**B1**

(12)

# EUROPÄISCHE PATENTSCHRIFT

(45) Veröffentlichungstag der Patentschrift:
**23.10.85**

(21) Anmeldenummer: **82107924.1**

(22) Anmeldetag: **28.08.82**

(51) Int. Cl.⁴: **C 22 C 32/00,** C 03 C 14/00,
C 22 C 5/00, B 22 F 3/12,
A 44 C 27/00

(54) **Aus Edelmetall und Glas bestehender Werkstoff für Schmuck- und Gebrauchsgegenstände und Verfahren zu seiner Herstellung.**

(30) Priorität: **04.09.81 DE 3135034**

(43) Veröffentlichungstag der Anmeldung:
**16.03.83 Patentblatt 83/11**

(45) Bekanntmachung des Hinweises auf die Patenterteilung:
**23.10.85 Patentblatt 85/43**

(84) Benannte Vertragsstaaten:
**CH DE FR GB IT LI**

(56) Entgegenhaltungen:
**DE - A - 1 458 349**
**DE - B - 1 062 401**
**FR - A - 1 400 760**
**US - A - 3 746 568**

(73) Patentinhaber: **Degussa Aktiengesellschaft,**
**Weissfrauenstrasse 9, D-6000 Frankfurt am Main 1 (DE)**

(72) Erfinder: **Heidsiek, Horst, Dr. Dipl.-Phys.,**
**Fürstenbergstrasse 8, D-6450 Hanau 9 (DE)**
Erfinder: **Jäckel, Gernot, Taunusstrasse 65,**
**D-6467 Hasselroth 1 (DE)**

## Beschreibung

Die Erfindung betrifft einen Werkstoff für Schmuck- und Gebrauchsgegenstände aus einer Mischung aus einem Edelmetall oder einer Edelmetallegierung und 1 bis 70 Volumenprozent Glas, und ein Verfahren zur Herstellung dieses Werkstoffes.

Schmuckgegenstände werden von alters her aus Edelmetallen wie Gold, Silber, Platin und Palladium, oder aus deren Legierungen gefertigt. Das gleiche gilt zum Teil auch für Gebrauchsgegenstände, wie Bestecke, Uhrgehäuse, Brillen, Sportpokale, Orden oder Medaillen.

Es sind eine ganze Reihe von Edelmetall-Legierungen bekannt, die für solche Zwecke eingesetzt werden, wobei der Edelmetallanteil normalerweise überwiegt. Schmuckstücke sollen auch von der Werkstoffseite her kostbar, edel, dauerhaft und schön sein. Außerdem müssen die entsprechenden Werkstoffe gut verarbeitbar sein und in verschiedenen Farbnuancen zur Verfügung stehen.

Der Verkaufspreis von Schmuck- und Gebrauchsgegenständen aus Edelmetallen ist heute zu einem hohen Maße vom Preis der darin enthaltenden Edelmetalle bestimmt. Die Schmuckindustrie ist daher bestrebt, Legierungen mit niedrigerem Edelmetallgehalt einzusetzen oder leichtere Edelmetallwerkstoffe zu verwenden. Diesen Bestrebungen sind jedoch Grenzen gesetzt, da niederkarätige Legierungen keine zufriedenstellenden physikalischen und chemischen Eigenschaften mehr besitzen und insbesondere zur Oxydation und Korrosion neigen.

Aus der DE-A-14 58 461 sind korrosionsbeständige Sintermetall-Glas-Verbundstoffe bekannt, die 2 bis 70 Vol.% eines Glases enthalten, dessen Erweichungspunkt innerhalb 100°C von der Sintertemperatur des Metalles liegt, das aus Eisen, Stahl oder Aluminium besteht. Diese Werkstoffe haben jedoch den Nachteil, daß sie schlechte Verformungseigenschaften und eine ungenügende homogene Verteilung der Komponenten besitzen, was sich auch in ihren mechanischen Eigenschaften negativ bemerkbar macht.

In der US-A-3 746 568 werden Werkstoffe aus einem Edelmetall mit 2 bis 6 Gew.-% einer Glasfritte beschrieben, die 75 bis 89 Gew.-% Bleioxid, 10 bis 15 Gew.-% Boroxid, 1 bis 8 Gew.-% Bariumoxid und 0 bis 6 Gew.-% Siliziumoxid enthält. Die Glasfritte besitzt einen Erweichungspunkt von weniger als 450°C, insbesondere weniger als 350°C. Diese Werkstoffe dienen als Aufbrennpasten für mikroelektronische Teile.

Es war daher Aufgabe der vorliegenden Erfindung, einen Werkstoff für Schmuck- und Gebrauchsgegenstände zu finden, bestehend aus einem Edelmetall oder einer Edelmetallegierung und 1 bis 70 Vol.-% Glas, der gut verarbeitbar, auch niederkarätig noch oxidations- und korrosionsbeständig ist, eine relativ geringe Dichte aufweisen kann und in verschiedenen Farbnuancen zur Verfügung steht. Außerdem sollte ein Verfahren zu seiner Herstellung gefunden werden.

Diese Aufgabe wurde erfindungsgemäß dadurch gelöst, daß als Glas eine Glasfritte aus 15 bis 75 Gew.-% Bleioxid und/oder Zinkoxid, 5 bis 55 Gew.-% Siliziumdioxid, 0 bis 5 Gew.-% Boroxid, 0 bis 20 Gew.-% Alkalioxid, bis zu 10 Gew.-% Aluminiumoxid, bis zu 10 Gew.-% Zirkoniumdioxid und bis zu 10 Gew.-% Titandioxid mit einer Transformationstemperatur von 300 bis 500°C und einem Erweichungsintervall von mehr als 80°C verwendet wird. Besonders vorteilhaft sind solche Glasfritten mit Transformationstemperaturen zwischen 350 und 450°C und Erweichungsintervall von mehr als 120°C.

Die Transformationstemperatur gibt den Übergang der Fritten vom spröden zum zähplastischen Zustand an und ist bestimmt durch einen Knick in den Temperatur-Eigenschaftskurven nach DIN 52 3124. Sie wird dilatometrisch an Probekörpern bestimmt, indem Tangenten an die Dilatometerkurve angelegt werden. Die dem Schnittpunkt der Tangenten entsprechende Temperatur bezeichnet man als Transformationstemperatur, bei der die Fritten normalerweise eine Viskosität von etwa $10^{12}$ Pa · sec besitzen.

Das Erweichungsintervall ist das Temperaturintervall zwischen dem Erweichungsbeginn der Fritte und ihrer Halbkugeltemperatur, wobei beide Grenzwerte an zylindrischen Prüfkörpern unter dem Erhitzungsmikroskop bestimmt werden. Beim Erweichungsbeginn beobachtet man eine Kantenabrundung, bei der Halbkugeltemperatur ist der zylindrische Prüfkörper zu einer Halbkugel zusammengeschmolzen. Das Erweichungsintervall ist ein Maß für die Abhängigkeit der Viskosität von der Temperatur.

Durch die Verwendung von Glasfritten mit niedriger Transformationstemperatur und breitem Erweichungsintervall wird erreicht, daß bereits erheblich unterhalb der üblichen Sintertemperaturen der Edelmetalle bzw. Edelmetall-Legierungen das Glas erweicht und durch den Vorgang eines Flüssigphasensinters hohe Dichten und gute Verformungseigenschaften des Werkstoffes erzielt werden können.

Die erfindungsgemäßen Werkstoffe enthalten als Edelmetallkomponente vorzugsweise Gold, Silber, Platin und/oder Palladium, oder deren Legierungen untereinander oder mit Unedelmetallen, wie Kupfer, Nickel, Zinn oder Zink. Außerdem können auch dispersionsgehärtete Edelmetallpulver als Ausgangspunkt verwendet werden. Um Schmuckwerkstoffe mit ungewöhnlichen Farbnuancen herzustellen, ist es möglich, die Glasfritten mit Farbpigmenten oder sonstigen beständigen Farbstoffen zu versetzen.

Die erfindungsgemäßen Werkstoffe werden durch Vermischen der Metallpulver mit 1 bis 70 Vol.-% eines feinen Glasfrittenpulvers, Pressen, Sintern und Warmverformen hergestellt. Vorzugsweise verwendet man hierfür Metallpulver mit einer Teilchengröße ≤ 250μm, insbesondere

≤ 63 µm, während sich für die Fritte Teilchengrößen von ≤ 50µm, insbesondere ≤ 10 µm bewährt haben. Vorteilhaft ist es, wenn die Fritteteilchen eine Kugelform oder eine ungefähre Kugelform besitzen. Das Pulvergemisch wird bei Raumtemperatur und Drücken von 500 bis 5000 bar gepresst, dann bei 500 bis 800°C gesintert und anschließend bei 500 bis 700°C und Drücken von 100 bis 200 bar warmverformt, insbesondere durch Strangpressen. Vorteilhaft sind Preßdrücke von 1000 bis 3000 bar und Sintertemperaturen von 550 bis 750°C. Das Glas sollte bei der Verarbeitung eine Viskosität von $10^9$ bis $10^3$ Pa · sec besitzen, vorzugsweise $10^5$ Pa · sec.

Durch eine thermische Nachbehandlung der erfindungsgemäß hergestellten Formkörper bei etwa 400°C oberhalb der Transformationstemperatur der Glasfritte erreicht man, daß sich ein Glasüberzug auf der Werkstoffoberfläche bildet, der zu dekorativen Zwecken genutzt werden kann, insbesondere wenn die Glasfritte eingefärbt ist.

Die erfindungsgemäßen Werkstoffe aus Edelmetall und Glas besitzen eine geringere Dichte als entsprechende Legierungen. Dadurch dann bei gleicher Materialstärke bzw. -volumen Edelmetall eingespart werden. Außerdem besitzen diese Werkstoffe eine höhere mechanische Festigkeit und einen höheren Verschleißwiderstand bzw. Kratzfestigkeit als entsprechende Legierungen. Sie sind gut verarbeitbar und durch die Verwendung von reinem bzw. hochkarätigem Edelmetall oxidations- und korrosionsbeständig. Alle bekannten Farbnuancen können hergestellt und neue Farben durch die Einfärbung der Glaskomponente geschaffen werden.

Die erfindungsgemäßen Werkstoffe sind lötfähig und galvanisierbar. Von Vorteil ist auch eine leichtere Rückgewinnung des Edelmetalls aus entsprechenden Abfällen.

## Patentansprüche

1. Werkstoff für Schmuck- und Gebrauchsgegenstände aus einer Mischung aus einem Edelmetall oder einer Edelmetallegierung und 1 bis 70 Vol.-% Glas, wobei als Glas eine Glasfritte aus 15 bis 75 Gew.-% Bleioxid und/oder Zinkoxid, 5 bis 55 Gew.-% Siliziumdioxid, 0 bis 5 Gew.-% Boroxid 0 bis 20 Gew.-% Alkalioxide bis zu 10 Gew.-% Aluminiumoxid, bis zu 10 Gew.-% Zirkoniumdioxid und bis zu 10 Gew.-% Titandioxid mit einer Transformationstemperatur von 300 bis 500°C und einem Erweichungsintervall von mehr als 80°C verwendet wird.

2. Werkstoff nach Anspruch 1, dadurch gekennzeichnet, daß eine Glasfritte mit einer Transformationstemperatur von 350 bis 450°C und einem Erweichungsintervall von mehr als 120°C verwendet wird.

3. Werkstoff nach Anspruch 1 und 2, dadurch gekennzeichnet, daß als Edelmetallkomponente Gold, Silber, Platin und/oder Palladium eingesetzt wird.

4. Werkstoff nach Anspruch 1 bis 3, dadurch gekennzeichnet, daß die Edelmetallteilchen noch Kupfer, Nickel, Zinn oder Zink als Legierungskomponente enthalten.

5. Werkstoff nach Anspruch 1 bis 4, dadurch gekennzeichnet, daß die Glasfritte farbgebende Pigmente enthält.

6. Verfahren zur Herstellung von Werkstoffen für Schmuck- und Gebrauchsgegenstände nach Anspruch 1 bis 5, durch Vermischen eines Edelmetall- oder Edelmetallegierungspulvers mit 1 bis 70 Vol.-% einer Glasfritte, Pressen, Sintern und Warmverformen, dadurch gekennzeichnet, daß das Pressen bei Raumtemperatur mit Drücken von 500 bis 5000 bar, das nachfolgende Sintern bei Temperaturen von 500 bis 800°C und die abschließende Warmverformung bei 500 bis 700°C und Drücken von 100 bis 200 bar erfolgt.

7. Verfahren zur Herstellung von Werkstoffen nach Anspruch 6, dadurch gekennzeichnet, daß das Pressen bei 1000 bis 3000 bar und das Sintern bei 550 bis 750°C erfolgt.

8. Verfahren zur Herstellung von Werkstoffen nach Anspruch 6 und 7, dadurch gekennzeichnet, daß durch eine thermische Nachbehandlung bei ungefähr 400°C oberhalb der Transformationstemperatur der Glasfritte ein Glasüberzug auf der Werkstoffoberfläche erzeugt wird.

9. Verfahren zur Herstellung von Werkstoffen nach Anspruch 6 bis 8, dadurch gekennzeichnet, daß Glasfritten mit einer Teilchengröße von ≤ 50 µm verwendet werden.

10. Verfahren zur Herstellung von Werkstoffen nach Anspruch 6 bis 9, dadurch gekennzeichnet, daß Glasfritten mit einer kugeligen Teilchenform eingesetzt werden.

## Claims

1. Material for ornaments and articles for daily use consisting of a mixture of a noble metal or a noble metal alloy and from 1 to 70% by volume of glass, wherein a glass frit consisting of from 15 to 75% by weight of lead oxide and/or zinc oxide, from 5 to 55% by weight of silicon dioxide, from 0 to 5% by weight of boron oxide, from 0 to 20% by weight of alkaly metal oxide, up to 10% by weight of aluminium oxide, up to 10% by weight of zirconium dioxide and up to 10% by weight of titanium dioxide with a transformation temperature of from 300 to 500°C and a softening range of greater than 80°C is used as the glass.

2. Material according to claim 1, characterised in that the glass frit has a transformation temperature of from 350 to 450°C and a softening range of greater than 120°C.

3. Material according to claim 1 and 2, characterised in that gold, silver, platinum and/or palladium is used as noble metal component.

4. Material according to claim 1 to 3, characterised in that the noble metal particles also contain copper, nickel, tin or zinc as alloy component.

5. Material according to claim 1 to 4, characterised in that the glass frit contains colouring pigments.

6. Process for the production of materials for ornaments and articles for daily use according to claim 1 to 5, by mixing a noble metal- or a noble metal alloy powder with from 1 to 70% by volume of a glass frit, pressing, sintering and shaping under heat, characterised in that the pressing takes place at room temperature under a pressure of from 500 to 5000 bars, the subsequent sintering takes place at a temperature of from 500 to 800°C and the final shaping under heat takes places at from 500 to 700°C and under a pressure of from 100 to 200 bars.

7. Process for the production of materials according to claim 6, characterised in that the pressing takes place at from 1000 to 3000 bars and the sintering takes place at from 550 to 750°C.

8. Process for the production of materials according to claim 6 and 7, characterised in that a glass coating is produced on the surface of the material by subsequent thermal treatment at about 400°C above the transformation temperature of the glass frit.

9. Process for the production of materials according to claim 6 to 8, characterised in that glass frits with a particle size of $\leq 50\,\mu m$ are used.

10. Process for the production of materials according to claim 6 to 9, characterised in that glass frits a spherical particle shape are used.

## Revendications

1. Matériau pour bijoux et objets d'usage courant constitué d'un mélange d'un métal précieux ou d'un alliage de métal précieux et de 1 à 70% en volume de verre, en utilisant en tant que verre une fritte de verre constituée de 15 à 75% en poids d'oxyde de plomb et/ou d'oxyde de zinc, de 5 à 55% en poids de dioxyde de silicium, de 0 à 5% en poids d'oxyde de bore, de 0 à 20% en poids d'un oxyde alcalin, jusqu'à 10% en poids d'oxyde d'aluminium, jusqu'à 10% en poids de dioxyde de zirconium et jusqu'à 10% en poids de dioxyde de titane, ayant une température de transformation de 300 à 500°C et un intervalle de ramollissement de plus de 80°C.

2. Matériau selon la revendication 1, caractérisé par le fait que l'on utilise une fritte de verre ayant une température de transformation de 350 à 450°C et un intervalle de ramollissement de plus de 120°C.

3. Matériau selon les revendications 1 et 2, caractérisé par le fait que l'on utilise en tant que composant de métal précieux de l'or, de l'argent, du platine et/ou du palladium.

4. Matériau selon les revendications 1 à 3, caractérisé par le fait que les particules de métal précieux contiennent aussi du cuivre, du nickel, de l'étain ou du zinc en tant que composant d'alliage.

5. Matériau selon les revendications 1 à 4, caractérisé par le fait que la fritte de verre contient un pigment colorant.

6. Procédé pour la préparation de matériaux pour bijoux et objets d'usage courant selon les revendications 1 à 5, par mélange d'une poudre de métal précieux ou d'alliage de métaux précieux avec 1 à 70% en volume d'une fritte de verre, pressage, frittage et façonnage à chaud, caractérisé par le fait que l'on effectue le pressage à température ambiante avec des pressions de 500 à 5000 bars, le frittage suivant à des températures de 500 à 800°C et le façonnage à chaud final à une température de 500 à 700°C et sous des pressions de 100 à 200 bars.

7. Procédé pour la préparation de matériaux selon la revendication 6, caractérisé par le fait que l'on effectue le pressage à la pression de 1000 à 3000 bars et le frittage à la température de 550 à 750°C.

8. Procédé pour la préparation de matériaux selon les revendications 6 et 7, caractérisé par le fait que par un traitement thermique ultérieur à environ 400°C au-dessus de la température de transformation de la fritte de verre, on obtient une pellicule vitreuse à la surface du matériau.

9. Procédé pour la préparation de matériaux selon les revendications 6 à 8, caractérisé par le fait que les frittes de verre sont utilisées avec une dimension de particules de $\leq 50\,\mu m$.

10. Procédé pour la préparation de matériaux selon les revendications 6 à 9, caractérisé par le fait que les frittes de verre que l'on utilise, ont la forme de particules sphériques.